# EUROPÄISCHE PATENTSCHRIFT

(11) **EP 0 363 457 B1**
(45) Veröffentlichungstag und Bekanntmachung des Hinweises auf die Patenterteilung: **27.01.1993**
(21) Anmeldenummer: 89903143.9
(22) Anmeldetag: 13.03.1989
(51) Int. Cl.: H01F 7/20, G01N 21/31, G01N 21/74

(54) **ELEKTROMAGNET FÜR EIN ATOMABSORPTIONS-SPEKTROMETER**
ELCTROMAGNET FOR AN ATOMIC ABSORPTION SPECTROMETER
ELECTRO-AIMANT POUR UN SPECTROMETRE D'ABSORPTION ATOMIQUE

(30) Priorität: 18.03.1988 DE 3809215
(43) Veröffentlichungstag der Anmeldung: 18.04.1990
(73) Patentinhaber: BODENSEEWERK PERKIN-ELMER GMBH, D-88662 Überlingen (DE)
(72) Erfinder: ROGASCH, Klaus, Peter, D-7772 Uhldingen-Mühlhofen 1 (DE)
(74) Vertreter: Weisse, Jürgen, Dipl.-Phys. Patentanwalt
(86) Internationale Anmeldenummer: EP8900259
(87) Internationale Veröffentlichungsnummer: WO8908922

(56) Entgegenhaltungen:
- EP-A- 0 046 936
- Analytical Chemistry, Vol. 52; No. 8, July 1980, P.R. Liddel et al.: "Application of a modulated magnetic field to a graphite furnace in Zeeman effect atomic absorption spectometry", pages 1257-1260
- Bulletin Oerlikon, N. 385/386, January 1969, E. Violi: "Aus der Entwicklung der Oerlikon-Laboratoriums Magnete", pages 1-4
- Spectroscopy Letters, Vol. 7, No. 8, 1975, Marcel Dekker (US), J.W. Robinson et al.: "A metal specific atomic absorption detector for gas chromotography - its use in the determination of lead alkyls in gasoline", pages 491-507
- D.J. Kroon: "Laboratory Magnets", Philips Tech. Libr. Eindhoven (NL), 1968, pages 109, 62-65, 127-129, 173-177
- Analytical Chemistry, Vol. 57, No. 2, February 1985; Guo Tie-Zheng et al.: "Use of air-cored solenoids for Zeeman background correction", pages 424-427
- Instrum. & Exp. Techn., Vol. 29, No. 5, part 2, September-October 1986; Yu P. Sukhorukov et al.: "Compact electromagnet for optical studies", pages 1224-1225

## Beschreibung

### Technisches Gebiet

Die Erfindung betrifft ein Atomabsorptions-Spektrometer, bei welchem eine Probe mittels eines Ofens elektrothermisch atomisiert wird und ein Messlichtbündel von einer linienemittierenden Lichtquelle durch den Ofen auf einen Detektor geleitet wird und bei welchem durch einen Magneten mit Magnetspulen und Polschuhen in einem den Ofen enthaltenden Luftspalt ein in Richtung des Messlichtbündels verlaufendes, moduliertes Magnetfeld zur Untergrundkompensation erzeugt wird.

Atomabsorptions-Spektrometer dienen zur Bestimmung der Menge oder Konzentration eines gesuchten Elementes in einer Probe. Zu diesem Zweck wird von einer linienemittierenden Lichtquelle, beispielsweise einer Hohlkathodenlampe, ein Messlichtbündel auf einen photoelektrischen Detektor geleitet. Im Strahlengang dieses Messlichtbündels ist eine Atomisierungsvorrichtung angeordnet. In dieser Atomisierungsvorrichtung wird die zu untersuchende Probe atomisiert, so dass ihre Bestandteile in atomarem Zustand vorliegen. Das Messlichtbündel enthält die Resonanzlinien des gesuchten Elements. Diese Resonanzlinien des Messlichtbündels werden von den Atomen des gesuchten Elements in der Atomwolke absorbiert, während im Idealfall die anderen in der Probe enthaltenen Elemente das Messlichtbündel nicht beinflussen. Das Messlichtbündel erfährt daher eine Schwächung, die ein Mass für die Anzahl der im Weg des Messlichtbündels befindlichen Atome des gesuchten Elements und damit je nach dem angewandten Atomisierungsverfahren ein Mass für die :Konzentration oder die Menge des gesuchten Elementes in der Probe darstellt. Die Absorption, die das Messlichtbündel erfährt, wird aber nicht nur durch die Atome des gesuchten Elements hervorgerufen. Es gibt eine "Untergrundabsorption", beispielsweise infolge der Absorption des Lichts durch Moleküle. Diese Untergrundabsorption muss insbesondere bei hochempfindlichen Messungen kompensiert werden.

Als Atomisierungsvorrichtung kann eine Flamme dienen, in welche eine Probe als Lösung eingesprüht wird. Für hochempfindliche Messungen verwendet man aber vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schliesslich atomisiert.

In dem Ofen bildet sich dann eine "Atomwolke" aus, in welcher das gesuchte Element in atomarer Form vorliegt. Das Messlichtbündel wird durch diesen Ofen hindurchgeleitet. Diese Öfen können verschiedene Formen haben. Sie werden üblicherweise aus Graphit hergestellt.

Zur Untergrundkompensation wird der "Zeeman-Effekt" ausgenutzt. Wenn an die absorbierenden Atome in der atomisierten Probe ein Magnetfeld angelegt wird, dann erfolgt eine Aufspaltung und Verschiebung der Resonanzlinien dieser Atome. Die Resonanzlinien der Atome fallen dann nicht mehr mit den Spektrallinien des Messlichtbündels zusammen und es erfolgt im Grenzfall keine atomare Absorption mehr. Dadurch kann zwischen nicht-atomarer Untergrundabsorption, die auch bei anliegendem Magnetfeld auftritt, und echter Atomabsorption, die bei nicht-anliegendem Magnetfeld der Untergrundabsorption überlagert ist, unterschieden werden.

Die Erfindung bezieht sich auf einen Elektromagneten, der bei einem Atomabsorptions-Spektrometer den Zeeman-Effekt am Ort der Probe für die Messung der Untergrundabsorption hervorruft.

### Zugrundeliegender Stand der Technik

Durch die DE-AS 19 64 469 ist ein Atomabsorptions-Spektrometer bekannt, bei welchem die Strahlung von einer einzigen, als Linienstrahler ausgebildeten Strahlungsquelle ausgeht, deren durch die Probe tretende Strahlung unter Ausnutzung des longitudinalen Zeeman-Effektes frequenzmoduliert wird. Bei diesem bekannten Atomabsorptions-Spektrometer sitzt eine Hohlkathodenlampe zwischen den Polschuhen eines Elektromagneten. Einer der Polschuhe weist eine Bohrung auf, durch welche das Messlichtbündel hindurchtritt. Das Messlichtbündel tritt dann durch eine als Atomisierungsvorrichtung dienende Flamme und einen Monochromator und fällt auf einen photoelektrischen Detektor. Der Elektromagnet ist ein- und ausschaltbar, wobei aus der Differenz der Signale bei aus- und eingeschaltetem Elektromagneten die atomare, hinsichtlich der Untergrundabsorption kompensierte Absorption der Probenatome bestimmt werden kann. Die Wicklungen des Elektromagneten sitzen dort auf den Polschuhen.

Bei dem bekannten Atomabsorptions-Spektrometer werden die Emissionslinien der linienemittierenden Lichtquelle durch den Zeeman-Effekt periodisch verschoben und damit das emittierte Licht frequenzmoduliert und nicht die Absorptionslinien der Probe. Das kann bei Verwendung einer Hohlkathodenlampe als Lichtquelle zu Problemen führen, da die Entladung der Hohlkathodenlampe durch das Magnetfeld beeinflusst wird, worauf auch schon in der DE-AS 19 64 469 hingewiesen wird.

Durch die DE-PS 21 65 106 ist es bekannt, das Magnetfeld eines ein- und ausschaltbaren Elektromagneten statt an die Lichtquelle an die Atomisierungsvorrichtung anzulegen, also an die atomisierte Probe. Die Atomisierungsvorrichtung ist dabei eine Flamme. Das Magnetfeld wird senkrecht zur Laufrichtung des Messlichtbündels angelegt. Es erfolgt hier eine Aufspaltung der Absorptionslinien infolge des "transversalen" Zeeman-Effektes, was wiederum eine Relativverschiebung der Emissionslinien des Messlichtbündels und der Absorptionslinien der Probe bewirkt. Durch Ein- und Ausschalten des Magnetfeldes kann wieder zwischen atomarer Absorption durch die Atome des gesuchten Elements und unspezifischer Untergrundabsorption unterschieden werden.

Bei der Anwendung des transversalen Zeeman-Effektes erfolgt die Aufspaltung einer Spektrallinie in eine zentrale Linie, deren Wellenlänge der unverschobenen Wellenlänge der betreffenden Linie bei abgeschaltetem Magnetfeld entspricht, und zwei demgegenüber zu höheren und zu niedrigeren Wellenlängen hin verschobenen Seitenlinien. Die zentrale Linie und die Seitenlinien sind unterschiedlich polarisiert. Man kann daher den Einfluss der zentralen Linie durch einen Polarisator eliminieren.

Als Atomisierungsvorrichtungen sind Öfen zur elektrothermischen Atomisierung der Probe bekannt. Als solche dienen beispielsweise Graphitrohre, die zwischen ringförmigen Kontakten gehalten sind und durch welche das Messlichtbündel in Längsrichtung hindurchtritt. Über die ringförmigen Kontakte wird ein starker elektrischer Strom durch das Graphitrohr geleitet. Die in das Graphitrohr eingebrachte Probe wird dadurch atomisiert und bildet innerhalb des Graphitrohres eine "Atomwolke". In dieser Atomwolke liegt das gesuchte Element in atomarer Form vor. Solche mit einem Graphitrohr arbeitenden Atomisierungsvorrichtungen sind beispielsweise aus der DE-PS 23 14 207 und der DE-PS 21 48 783 bekannt.

Es ist auch bekannt, bei solchen Atomisierungsvorrichtungen, die mit einem in Längsrichtung von Strom durchflossenen Graphitrohr arbeiten, eine Kompensation der Untergrundabsorption durch Ausnutzung des Zeeman-Effektes vorzunehmen. Zu diesem Zweck wird durch einen Elektromagneten ein quer zur Laufrichtung des Messlichtbündels gerichtetes Wechselmagnetfeld an das Graphitrohr angelegt.

Es sind Öfen für die elektrothermische Atomisierung einer Probe in einem Atomabsorptions-Spektromer bekannt, bei denen der Strom nicht in Längsrichtung durch ein Graphitrohr hindurchgeleitet wird sondern in Umfangsrichtung. Beispiele hierfür sind die US-PS 4 407 582 und die DE-OS 35 34 417 sowie eine im wesentlichen inhaltsgleiche Veröffentlichung in "Analytical Chemistry" 58 (1986), 1973.

Durch einen Aufsatz von Liddell and Brodie "Application of a Modulated Magnetic Field to a Graphite Furnace in Zeeman Effect Atomic Absorption Spectrometry" in "Analytical Chemistry" Bd 52 (1980), 1256-1260, ist ein Atomabsorptions-Spektrometer bekannt, bei dem ein Ofen zur elektrothermischen Atomisierung einer Probe im Luftspalt eines Elektromagneten angeordnet ist. Der Ofen wird von einem Messlichtbündel durchstrahlt. Dabei verläuft das Magnetfeld parallel zur Richtung des Messlichtbündels. Das Magnetfeld wird moduliert. Dadurch werden Signale erhalten, die eine Kompensation der Untergrundabsorption gestatten.

Bei der dort beschriebenen Anordnung enthält der Elektromagnet zwei Kupferdrahtspulen, die auf einem C-förmigen, laminierten Kern symmetrisch zu den sich um Luftspalt hin verjüngenden Polschuhen angeordnet sind. Die Polschuhe sind prismatisch und im Längsschnitt trapezförmig. Die sich verjüngenden Polschuhe liegen ausserhalb der Kupferdrahtspulen.

Durch ein Buch von D.J. Kroon "Laboratory Magnet" sind Magneten mit kegelstumpfförmigen Polschuhen bekannt. Es sind auch Polschuhe bekannt, die aus zwei aneinander anschliessenden kegelstumpfförmigen Abschnitten mit unterschiedlichen Kegelwinkeln bestehen, wobei Wicklungen auf dem dem Luftspalt abgewandten Abschnitt sitzen. Es ist aus diesem Dokument weiterhin bekannt, die Anordnung so zu wählen, dass die durch die kegelstumpfförmige Verjüngung gebildeten Polflächen der Sättigungsinduktion entsprechen. Es wird in dem Dokument schliesslich auf einen Konuswinkel von 63° als besonders günstig zur Erzielung eines homogenen Feldes hingewiesen.

Es ist auch bekannt, elektrische Spulen aus Rohren aufzubauen, die von einer Kühlflüssigkeit durchflossen sind (EP-A 0 046 936).

### Offenbarung der Erfindung

Der Erfindung liegt die Aufgabe zugrunde, ein Atomabsorptions-Spektrometer der eingangs genannten Art so auszubilden, dass ein möglichst starkes magnetisches Feld am Ort der Probe bei möglichst geringem Streufeld und möglichst geringen Abmessungen des Elektromagneten erzielt wird.

Erfindungsgemäss wird diese Aufgabe dadurch gelöst, dass
(a) die Polschuhe des Magneten angrenzend an den Luftspalt kegelstumpfförmig sind,
(b) die Polschuhe aus geklebtem Metallpulver-Verbundmaterial bestehen,
(c) auf die Polschuhe geschlitzte Spulenhalterungen aus gut wärmeleitendem Material aufgesetzt sind, die jeweils einen der Form des Polschuhs angepassten Nabenteil und an dessen Enden radial vorstehende Flansche aufweisen,
(d) die Magnetspulen auf den Spulenhalterungen bis in unmittelbare Nähe des Luftspaltes gewickelt sind,
(e) die Windungen der Magnetspulen von Rohren gebildet sind, durch welche eine Kühlflüssigkeit hindurchleitbar ist und die Breite des Luftspaltes gerade so gross ist, dass der Luftspalt die Länge des Ofens aufnimmt.

Die Magnetspulen sind auf den Polschuhen angeordnet. Dadurch wird das Streufeld verringert. Es kann daher mit einer vorgegebenen elektrischen Leistung ein stärkeres Magnetfeld in dem Luftspalt erzeugt werden. Nachteile eines starken Streufeldes werden vermieden. Die Ausbildung der Polschuhe aus geklebtem Metallpulver-Verbundmaterial gestattet eine fertigungstechnisch günstige Herstellung der kegelstumpfförmigen Polschuhe. Die Polschuhe können dicht an die Atomisierungsvorrichtung herangerückt werden, ohne dass durch die Wärme des Ofens für die elektrothermische Atomisierung der Probe eine unzulässige Erwärmung der temperaturempfindlichen Polschuhe und durch den Erregerstrom ohnehin thermisch belasteten Magnetspulen stattfindet. Im Gegenteil: Die Kühlflüssigkeit führt Wärme ab. Das Heranrücken der Polschuhe an die Atomisierungseinrichtung wirkt ebenfalls im Sinne einer Homogenisierung des Magnetfeldes und einer Reduzierung der erforderlichen Leistung. Die Abmessungen des Elektromagneten können kleiner gehalten werden.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

Fig. 1 zeigt schematisch den Aufbau eines Atomabsorptions-Spektrometers, bei welchem die Untergrundabsorption durch Ausnutzung des longitudinalen Zeeman-Effektes kompensiert wird.

Fig. 2 ist eine Seitenansicht, teilweise im Schnitt des Elektromagneten, durch welchen der longitudinale Zeeman-Effekt erzeugt wird, und eines Ofens zur elektrothermischen Atomisierung der Probe im Luftspalt des Elektromagneten.

Fig. 3 zeigt einen Schnitt längs der Linie III - III von Fig.2.

### Bevorzugte Ausführung der Erfindung

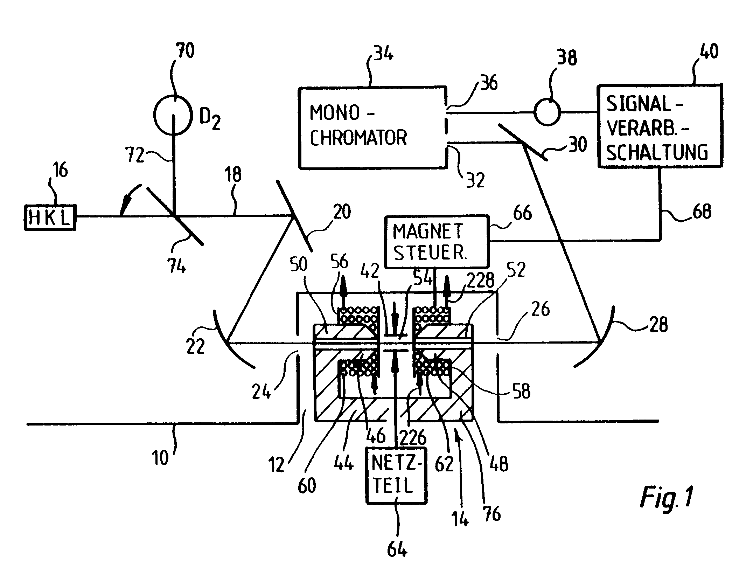

Fig.1 ist eine schematische Darstellung des gesamten Atomabsorptions - Spektrometers.

Das Atomabsorptions - Spektrometer weist ein Gehäuse 10 auf, in welchem die Lampen, das optische System und der photoempfindliche Detektor angeordnet sind. Das Gehäuse 10 bildet einen Probenraum 12. In dem Probenraum 12 ist eine Atomisierungsvorrichtung 14 angeordnet.

Das Atomabsorptions - Spektrometer weist als Lichtquelle 16 eine Hohlkathodenlampe auf. Die Lichtquelle 16 emittiert ein Linienspektrum, das den Resonanzlinien eines gesuchten Elements entspricht. Von der Lichtquelle 16 geht ein Meßlichtbündel 18 aus. Das Meßlichtbündel 18 wird von einem Planspiegel 20 umgelenkt und von einem Hohlspiegel 22 durch eine Öffnung 24 des Gehäuses 10 hindurch in der Mitte des Probenraumes gesammelt. Das Meßlichtbündel 18 tritt dann durch eine mit der Öffnung 24 fluchtende Öffnung 26 des Gehäuses 10 und fällt auf einen zweiten Hohlspiegel 28. Von dem zweiten Hohlspiegel 28 wird das Meßlichtbündel 18 über einen Planspiegel 30 auf dem Eintrittsspalt 32 eines Monochromators 34 fokussiert. Hinter einem Austrittsspalt 36 des Monochromators 34 sitzt ein photoelektrischer Detektor 38. Das Signal des photoelektrischen Detektors 38 beaufschlagt eine Signalverarbeitungs - Schaltung 40.

Die Atomisierungsvorrichtung 14 enthält einen Ofen zur elektrothermischen Atomisierung, von welchem in Fig.1 nur der eigentliche Ofenkörper 42 dargestellt ist, und einen ein- und ausschaltbaren Elektromagneten 44 zur Erzeugung eines Magnetfeldes am Ort der Probe. Der Elektromagnet 44 weist zwei fluchtende Polschuhe 46 und 48 auf, zwischen denen der Ofenkörper 42 sitzt. In den Polschuhen 46 und 48 sind fluchtende Bohrungen 50 und 52 angebracht. Die Bohrungen 50 und 52 fluchten mit einer Längsbohrung 54 des Ofenkörpers 42. Das Meßlichtbündel 18 verläuft durch die Bohrungen 50 und 52 und durch die Längsbohrung 54 des Ofenkörpers 42. Auf den Polschuhen 50 und 52 sitzen Spulenhalterungen 56 bzw. 58. Auf diese Spulenhalterungen 56 und 58 sind Magnetspulen 60 bzw. 62 des Elektromagneten 44 gewickelt. Mit 64 ist ein Netzteil bezeichnet, welches den Strom durch den Ofenkörper 42 steuert. Wie angedeutet, wird der Strom quer zur Laufrichtung des Meßlichtbündels 18 zugeführt und fließt in Umfangsrichtung durch den rohrförmigen Ofenkörper 42. Der Elektromagnet 44 ist von einer Magnetsteuerung 66 gesteuert, derart, daß das Magnetfeld abwechselnd ein- und ausgeschaltet wird. Das Magnetfeld des Elektromagneten 44 verläuft am Ort der Probe innerhalb des Ofenkörpers 42 in Laufrichtung des Meßlichtbündels 18. Bei eingeschaltetem Magnetfeld wird daher an den Probenatomen der longitudinale Zeeman - Effekt erzeugt. Das bedeutet, daß die Absorptionslinien der Probenatome in jeweils zwei Linien aufgespalten werden, die gegenüber der ungestörten ursprünglichen Absorptionslinie verschoben sind. Bei der Wellenlänge der ursprünglichen Absorptionslinie erfolgt keine atomare Absorption in der Probe mehr. Daher absorbieren auch die Atome des gesuchten Elements das Meßlichtbündel 18 nicht mehr, da dieses Meßlichtbündel nur die unverschobenen für das Element charakteristischen Resonanzlinien enthält. Bei eingeschaltetem Magnetfeld wird daher nur die Untergrundabsorption gemessen. Aus den Messungen bei ein- und ausgeschaltetem Magnetfeld kann der hinsichtlich der Untergrundabsorption korrigierte Anteil der echten Atomabsorption bestimmt werden. Der Takt der Ein- und Ausschaltung des Elektromagneten 44 wird zu diesem Zweck auf die Signalauswertungs - Schaltung 40 gegeben, wie durch eine Leitung 68 angedeutet ist.

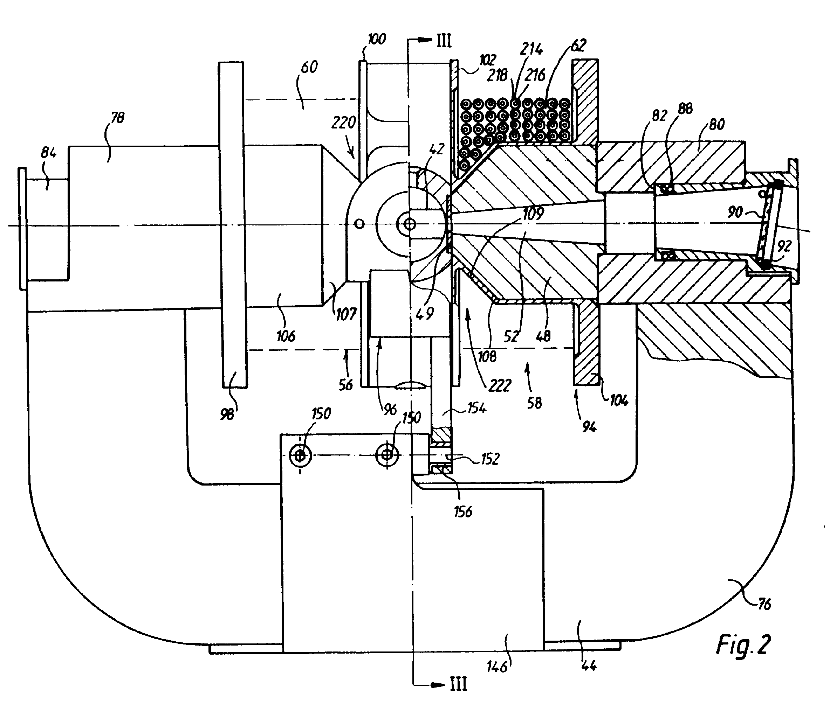

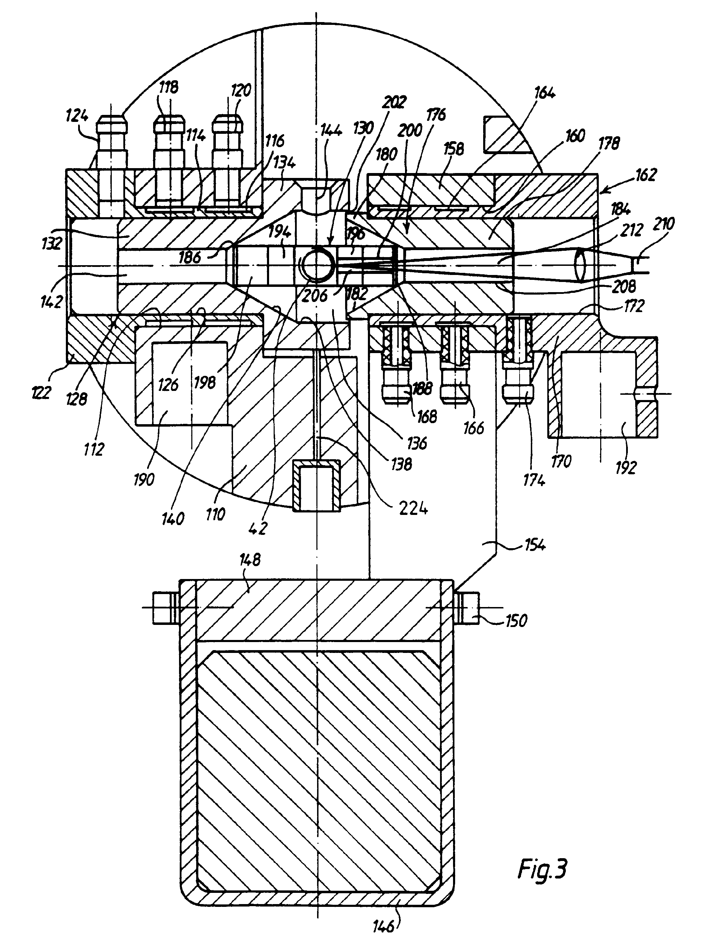

Der konstruktive Aufbau der Atomisierungsvorrichtung mit dem Elektromagneten 44 und dem Ofen ist in Fig.2 und 3 im einzelnen dargestellt.

Der Elektromagnet 44 weist einen u-förmigen magnetischen Rückschluß 76 aus lamelliertem Eisen und fluchtende Polschuhe 46,48 auf. Die Polschuhe 46 und 48 sind zylindrisch und verjüngen sich an den einander zugewandten Enden kegelstumpfförmig.

Die Polschuhe sind aus geklebtem Metallpulver - Verbundmaterial hergestellt. Dieses Material hat günstige magnetische Eigenschaften und läßt sich leicht bearbeiten. Die Mantellinien der kegelstumpfförmigen Abschnitte der Polschuhe 46,48 bilden mit den Achsen der Polschuhe Winkel von 63°. Die einander gegenüberliegenden Polflächen 47 bzw 49 sind so bemessen, daß sich im Bereich der Polflächen eine Sättigungsinduktion ergibt. Es erfolgt so eine optimale Konzentration des Magnetfeldes. Der Winkel der Polschuhschräge ist so gewählt, daß das Magnetfeld dabei möglichst homogen bleibt.

Die Polschuhe 46 und 48 sitzen an ebenfalls fluchtenden Endstücken 78 bzw. 80, die an den Schenkeln des u-förmigen magnetischen Rückschlusses 76 oder Joches angebracht sind und von diesen nach innen ragen. Durch die Polschuhe 46 und 48 und die Endstücke 78 und 80 erstrecken sich die fluchtenden Bohrungen 50 bzw. 52. In den Polschuhen 46 und 48 haben die Bohrungen 50 bzw. 52 konische Innenwandungen, um die Fokussierung des Meßlichtbündels auf die Mitte des Ofenkörpers 42 zu ermöglichen und dabei aber möglichst wenig Eisen zu entfernen. Im Bereich der Endstücke 78 und 80 bilden die Bohrungen 50 bzw. 52 Schultern 82. In die Bohrungen 50 und 52 sind Fensterfassungen 84 bzw. 86 eingesetzt und durch O-Ringe 88 abgedichtet. In den Fensterfassungen 84 und 86 sitzen Fenster 90, die zur Vermeidung von Reflexen schräg in der Fensterfassung 84 bzw. 86 angeordnet sind und durch Dichtringe 92 gehalten werden.

Auf den Polschuhen 46 und 48 sitzt ein integraler Bauteil 94 aus einem unmagnetischen Werkstoff wie Aluminium. Dieser Bauteil bildet einerseits die Spulenhalterungen 56 und 58, auf welche die Magnetspulen 60 bzw. 62 gewickelt sind, und andererseits einen Kontaktträger 96, welcher einen der Kontakte trägt, zwischen denen der Ofen gehalten wird.

Die Spulenhalterungen 56 und 58 sind von spulenförmigen Teilen mit zwei Flanschen 98 und 100 bzw. 102 und 104 und Nabenteilen 106 bzw. 108 gebildet. Die Nabenteile 106 und 108 sind an die Form der Polschuhe 46 bzw. 48 angepaßt, haben also ebenfalls einen an den Luftspalt anschließenden konischen Abschnitt 107 bzw. 109. Zwischen den einander zugewandten Flanschen 100 und 102 der beiden Spulenhalterungen 56 und 58 sitzt ein Block 110 mit einer Bohrung 112. In der Bohrung 112 sitzt ein Einsatz 114 mit u-förmigen Nuten 116 auf seiner Außenfläche, die zusammen mit der Innenfläche der Bohrung 112 einen Kühlkanal bilden. Dieser Kühlkanal ist mit einem Einlaß 118 und einem Auslaß 120 für eine Kühlflüssigkeit verbunden. Der Einsatz weist einen Kopfteil 122 auf, an welchem ein Schutzgaseinlaß 124 vorgesehen ist. Durch den Einsatz 114 erstreckt sich eine zentrale Axialbohrung 126, die an ihrem in Fig.3 linken Ende geschlossen ist. In dieser Axialbohrung sitzt ein Kontakt 128, durch welchen ein Ofen 130 für die thermoelektrische Atomisierung auf der einen Seite gehalten ist und über welchen auch die Stromzufuhr zu dem Ofen 130 erfolgt.

Der Kontakt 128 weist einen Schaft 132 auf, der in der Axialbohrung 126 sitzt, und einen Kopf 134. Der Kopf 134 weist in seiner Stirnfläche eine Ausnehmung 136 auf. Diese Ausnehmung 136 ist angrenzend an die Stirnfläche zunächst in einem Abschnitt 138 zylindrisch und verengt sich dann konisch in einem Abschnitt 140. In dem Schaft 132 verläuft eine zentrale Axialbohrung 142, die auf dem Grund der Ausnehmung 136 mündet. In dem zylindrischen Abschnitt 138 ist in dem Kopf 134 oben in Fig.3 eine radiale Eingabeöffnung 144 gebildet, durch welche Probe in den Ofen eingegeben werden kann.

Der magnetische Rückschluß 76 des Elektromagneten 44 ist von einem im Querschnitt u-förmigen Blechteil 146 umgeben, in welchem ein Lagerteil 148 durch Bolzen 150 gehalten ist. An einem Zapfen 152 des Lagerteils ist ein Schwenkarm 154 über eine Lagerbuchse 156 schwenkbar gelagert. An dem Schwenkarm 154 sitzt ein beweglicher Block 158. Der Block 158 weist ähnlich wie der Block 110 eine Bohrung 160 auf. In der Bohrung 160 sitzt ein Einsatz 162 ähnlich dem Einsatz 114. Der Einsatz 162 hat auf seiner Außenfläche u-förmige Nuten 164, die mit der Innenfläche der Bohrung 160 einen Kühlkanal bilden. Dieser Kühlkanal ist an seinen Enden mit einem Einlaßanschluß 166 und einem Auslaßanschluß 168 für Kühlflüssigkeit verbunden. Der Einsatz 162 hat einen Kopf 170. Eine zentrale Axialbohrung 172 erstreckt sich durch den Einsatz 162 und den Kopf 170. Die Axialbohrung 172 ist auf der in Fig.3 rechten Seite durch ein Fenster verschlossen. In die Axialbohrung 172 mündet ein Schutzgasanschluß 174. In der Axialbohrung 172 sitzt ein Kontakt 176. Der Kontakt 176 hat einen zylindrischen Schaft 178 und einen flachen Kopf 180. In der Stirnfläche des Kopfes 180 ist eine konische Vertiefung 182 gebildet. Die Vertiefung 182 entspricht ungefähr der Vertiefung 140. In dem Schaft 178 des Kontaktes 176 verläuft eine zentrale Axialbohrung 184, ähnlich der Bohrung 142.

In der Arbeitsstellung des Schwenkarmes 154, wie sie in Fig.3 dargestellt ist, wird der Ofen 130 mit konischen Kontaktflächen 186 und 188 zwischen den Kontakten 128 und 176 gehalten. Die Achsen der Kontakte 128 und 176 fluchten dann. Über die Blöcke 110 und 158, die Einsätze 114 und 162 und die Kontakte 128 und 176 wird auch der Strom auf den Ofen 130 geleitet. Zu diesem Zweck sind der Block 110 und der Einsatz 162 mit Steckanschlüssen 190 bzw. 192 für Hochstromkabel versehen.

Der Ofen 130 enthält den eigentlichen Ofenkörper 42, der am besten in Fig.2 erkennbar ist. Längs des Ofenkörpers 42 verlaufen diametral gegenüberliegende Kontaktrippen 194 und 196, die in Fig.3 erkennbar sind. An die Kontaktrippen 194 und 196 schließen sich im wesentlichen zylindrische Kontaktstücke 198 und 200 an, die mit den konischen Kontaktflächen 186 und 188 zwischen den Kontakten 128 und 176 gehalten sind. Die Achsen der Kontaktstücke 198 und 200 liegen also fluchtend mit den Achsen der Kontakte 128 und 176 in der Papierebene von Fig.3 und senkrecht zu der mit dem Meßlichtbündel 18 fluchtenden Achse des Ofenkörpers 42. Senkrecht zu diesen beiden Achsen, also oben in Fig.2 und 3 ist in dem Ofenkörper 42 eine Eingabeöffnung vorgesehen, die mit der Eingabeöffnung 144 fluchtet und durch welche Probe in den Ofen 130 eingebracht werden kann.

Die Kontakte 128 und 176 bilden mit ihren Ausnehmungen 136 und 168 einen Hohlraum, der den Ofen 130 enthält. Die Kontakte 128 und 176 sind dabei nur durch einen relativ schmalen Trennspalt 202 voneinander getrennt. Durch eine (nicht dargestellte) pneumatische Schwenkvorrichtung kann der Schwenkarm 154 im Uhrzeigersinn in Fig. 3 verschwenkt werden. Das ist in Fig. 3 durch einen Pfeil angedeutet. Damit wird der Block 158 mit dem Einsatz 162 und dem Kontakt 176 zurückgeschwenkt und der Ofen 130 zugänglich. Auf diese Weise kann ein Austausch des Ofens 130 erfolgen. Über die Schutzgasanschlüsse 124 und 174 wird ein Schutzgas zugeführt. Dieses Schutzgas strömt über die Bohrung 126 bzw. 172 und die Axialbohrungen 142 bzw. 184 zu den Kontaktstücken 198 bzw. 200 des Ofens 130. Das Schutzgas wird dann über noch zu beschreibende Kanäle im Ofen 130 verteilt. Die Kontakte 128 bzw. 176 sowie der Ofen 130 sind aus Graphit hergestellt. Das Schutzgas verhindert den Zutritt von Luftsauerstoff zu dem Ofen 130 beim Aufheizen und damit ein Verbrennen des Ofens 130.

Wie aus Fig. 2 ersichtlich ist, sitzt zwischen dem Kontakt 128 und der Stirnfläche des Polschuhs 48 eine Abschirmscheibe 204 mit einem zentralen Durchbruch für das Meßlichtbündel 18. Die Abschirmscheibe 204 besteht aus pyrolytischem Kohlenstoff mit einer hohen Wärmeleitfähigkeit in der Ebene der Abschirmscheibe 204 und einer schlechten Wärmeleitfähigkeit senkrecht zu dieser Ebene. Auf diese Weise wird der Polschuh 48 gegen die hohen Temperaturen des Ofens 130 und des Kontaktes 128 abgeschirmt.

Die Axialbohrungen 172 und 184 in dem Einsatz 162 und dem Kontakt 176 sowie ein Schutzgaskanal 206 in dem Kontaktstück 200 und der Kontaktleiste 196 dienen gleichzeitig zur Aufnahme eines Pyrometerstrahlenganges 208, in welchem von einem Strahlungsdetektor 210 mittels eines Abbildungssystems 212 ein Stück der Wandung des Ofenteils 42 beobachtet wird. Das Signal des Strahlungsdetektors 210 liefert ein Maß für die Temperatur des Ofenteils 42 und gestattet damit eine Regelung der Ofentemperatur.

Wie am besten aus Fig.2 ersichtlich ist, bestehen die Windungen der Magnetspulen 60 und 62 aus Kupferrohren 214 mit einem Längskanal 216 und einer Isolation 218. Die Kupferrohre 214 haben einen relativ großen Querschnitt für den elektrischen Strom. Es fließen also starke Ströme bei relativ wenigen Windungen, um das Magnetfeld zu erzeugen. Durch den Längskanal 216 strömt eine Kühlflüssigkeit, welche die in den Magnetspulen 60 und 62 durch den elektrischen Strom entwickelte Joulsche Wärme aber auch Wärme abzuführen, die von dem Ofen 130 auf die Magnetspulen übertragen wird. Das macht es möglich, die Magnetspulen 60 und 62 auf den Polschuhen 46,48 bis dicht an den Ofen 130 heranzurücken. Der Luftspalt ist praktisch gerade so groß, wie es erforderlich ist, um die Länge des Ofenkörpers 42 aufzunehmen.

Die Windungen der Magnetspulen 60 und 62 sind im Bereich der kegelstumpfförmigen Verjüngung der Polschuhe 46 und 48 auch in die zwischen den Flanschen 100 bzw. 102 und den kegelstumpfförmigen Abschnitten der Nabenteile 106 bzw.108 gebildeten, im Querschnitt v-förmigen Umfangsvertiefungen 220 und 47 bzw. 49 gelegt. Die Windungen liegen daher bevorzugt in unmittelbarer Nähe der Polflächen 47 bzw. 49 der Polschuhe 60 bzw. 62. Das wirkt der Ausbildung von Streufeldern entgegen und begünstigt die Homogenität des erzeugten Magnetfeldes.

Dies wird durch die Zwangskühlung der Windungen ermöglicht. Die Windungen der Magnetspulen 60 und 62 kühlen auch die Polschuhe 46 bzw. 48 und zwar gerade im Bereich der Polflächen 47 bzw. 49, wo die Polschuhe sich dem Ofen 130 stark nähern.

Wie aus Fig.1 ersichtlich ist, wird die Kühlflüssigkeit an Kühlflüssigkeitseinlässen 226 zugeführt und fließt über Kühlflüssigkeitsauslässe 228 ab.

Wie ausFig.3 ersichtlich ist, sind die Spulenhalterungen 56 und 58 und der Kontaktträger 96 mit einem radialen Schlitz 224 versehen. Diese Teile sind aus einem gut wärmeleitendem Material wie Aluminium hergestellt, um eine gute Wärmeabfuhr zu gewährleisten. Solche gut wärmeleitenden Materialien sind aber in der Regel auch gut elektrisch leitend. Das Magnetfeld kann daher in den Spulenhalterungen 56,58 und dem Kontaktträger Wirbelströme induzieren. Um das zu vermeiden, sind die Teile, wie dargestellt, auf einer Seite in Längsrichtung geschlitzt.

## Patentansprüche

1. Atomabsorptions-Spektrometer, bei welchem eine Probe mittels eines Ofens elektrothermisch atomisiert wird und ein Meßlichtbündel von einer linienemittierenden Lichtquelle durch den Ofen auf einen Detektor geleitet wird und bei welchem durch einen Magneten mit Magnetspulen und Polschuhen in einem den Ofen enthaltenden Luftspalt ein in Richtung des Meßlichtbündels verlaufendes, moduliertes Magnetfeld zur Untergrundkompensation erzeugt wird,
**dadurch gekennzeichnet, daß**
(a) die Polschuhe des Magneten angrenzend an den Luftspalt kegelstumpfförmig sind,
(b) die Polschuhe aus geklebtem Metallpulver-Verbundmaterial bestehen,
(c) auf die Polschuhe (46,48) geschlitze Spulenhalterungen (56,58) aus gut wärmeleitendem Material aufgesetzt sind, die jeweils einen der Form des Polschuhs angepaßten Nabenteil (106,108) und an dessen Enden radial vorstehende Flansche (98,100;102,104) aufweisen,
(d) die Magnetspulen (60,62) auf den Spulenhalterungen (56,58) bis in unmittelbare Nähe des Luftspaltes gewickelt sind,
(e) die Windungen der Magnetspulen (60,62) von Rohren (214) gebildet sind, durch welche eine Kühlflüssigkeit hindurchleitbar ist und
die Breite des Luftspaltes gerade so groß ist, daß der Luftspalt die Länge des Ofens (42) aufnimmt.

2. Atomabsorptions-Spektrometer nach Anspruch 1, **dadurch gekennzeichnet**, daß die durch die kegelstumpfförmige Verjüngung gebildeten Polflächen (47,49) der Sättigungsinduktion entsprechen.

3. Atomabsorptions-Spektrometer nach Anspruch 1, **dadurch gekennzeichnet**, daß die Mantellinien der kegelstumpfförmig sich verjüngenden beschnitte der Polschuhe (46,48) mit den Achsen der Polschuhe einen Winkel von 63° bilden.

## Claims

1. Atomic absorption spectrometer in which a sample is electrothermally atomized by means of a furnace, and a measuring light beam from a line emitting light source is passed through the furnace onto a detector, and in which a modulated magnetic field for underground compensation is generated by a magnet having magnet coils and pole shoes in an air gap containing the furnace,
**characterized in that**
(a) the pole pieces of the magnet adjacent to the air gap are truncated,
(b) the pole pieces are made of glued metal powder compound material,
(c) slotted coil holdings (56,58) of well heat conductive material are placed onto the pole pieces, each of the coil holdings having a hub element (106,108) matching the form of the pole piece and flanges (98,100;102,104) radially projecting at its ends,
(d) the magnet coils (60,62) are wound on the coil holdings (56,58) up to the close proximity of the air gap,
(e) the windings of the magnet coils (60,62) are formed by tubes (214) adapted to be flown-through by a coolant liquid, and
the width of the air gap is just large enough to accomodate the length of the furnace (42).

2. Atomic absorption spectrometer as set forth in claim 1, **characterized in that** the pole pieces (47,49) formed by the truncated taper correspond to the saturation induction.

3. Atomic absoprtion spectrometer as set forth in claim 1, **characterized in that** the generating lines of the truncatedly tappering sections of the pole pieces (46,48) form angles of 63° with the axes of the pole pieces.

## Revendications

1. Spectromètre d'absorption atomique dans lequel un échantillon est atomisé électrothermiquement au moyen d'un four, et un faisceau lumineux de mesure d'une source lumineuse émettant des lignes est guidé à travers le four sur un détecteur, et dans lequel un champ magnétique modulé s'étandant dans la direction du faisceau lumineux est engendré pour la compensation de fond, par un aimant avec des bobines magnétiques et des pièces polaires dans une entrefer,
**caractérisé par le fait que**
(a) les pièces polaires de l'aimant sont tronconiques à côté de l'entrefer,
(b) les pièces polaires sont faites de matière de compound de métal pulvérisé,
(c) des fixations de bobine fendues (56,58) d'une matière bien conductive de chaleur sont placées sur les pièces polaires (46,48) et présentent chacune un élément de noyeu (106,108) adapté à la forme de la pièce polaire et des flasques (98,100;102,104) saillant radialement à son extrémité,
(d) les bobines magnétiques (60,62) sur les fixations de bobine (56,58) sont enroulées jusqu'à l'approximité directe de l'entrefer,
(e) les spires des bobines magnétiques (60,62) sont formées par des tuyaux (214) par lesquels peut être guidé un liquide refroidisseur, et
la largeur de l'entrefer est justement aussi grand que l'entrefer recoit la longueur du four (42).

2. Spectromètre d'absorption atomique selon la revendication 1, **caractérisé par le fait que** les surfaces polaires (47,49) formées par la contracture tronconique correspondent à l'induction de saturation.

3. Spectromètre d'absorption atomique selon la revendication 1, **caractérisé par le fait que** la génératrice des sections coniques des pièces polaires (46,48) forment un angle de 63° avec les axes des pièces polaires.
